# EUROPÄISCHE PATENTANMELDUNG

(11) **EP 1 154 232 A2**
(43) Veröffentlichungstag der Anmeldung: **14.11.2001**
(21) Anmeldenummer: 01106075.3
(22) Anmeldetag: 13.03.2001
(51) Int. Cl.: G01C 11/02

(54) **Kamera, insbesondere Luftbildkamera**

(30) Priorität: 07.04.2000 DE 10017415
(71) Anmelder: Z/I Imaging GmbH, 73447 Oberkochen (DE)
(72) Erfinder: Teuchert, Wolf-Dieter, Dr., 89551 Königsbronn (DE); Hinz, Alexander, Dr., 89551 Königsbronn (DE)
(74) Vertreter: Gnatzig, Klaus

(57) **Zusammenfassung**

Bei einer Kamera (1) mit mindestens einem flächigen Bildsensor (7) und mit mindestens einem linienhaften Bildsensor (9, 10, 11, 12, 13, 14) sind dem flächigen Bildsensor (7) und dem linienhaften Bildsensor (9, 10, 11, 12, 13, 14) jeweils ein gesondertes Objektiv (17, 27) zugeordnet.

## Beschreibung

Die Erfindung betrifft eine Kamera nach dem Oberbegriff von Anspruch 1 und ein Bilderzeugungsverfahren mittels einer derartigen Kamera.

Eine gattungsgemäße Kamera ist z.B. aus der DE 3802219 A1 bekannt. Diese bekannte Kamera umfaßt drei als CCD-Zeilendetektoren ausgebildete linienhafte Bildsensoren und vier flächige Bildsensoren. Dabei sollen mittels der von den flächigen Bildsensoren erzeugten Flächenbildern die jeweilige Lage und Orientierung der linienhaften Bildsensoren bestimmt werden.

Aufgabe der Erfindung ist es, die gattungsgemäße Kamera so zu verbessern, daß ihr Anwendungsbereich erweitert wird.

Diese Aufgabe wird durch die Merkmale in Anspruch 1 gelöst. Denn durch das dem flächigen Bildsensor bzw. dem linienhaften Bildsensor jeweils zugeordnete, gesonderte Objektiv kann die Belichtungssteuerung für den flächigen Bildsensor unabhängig von der Belichtungssteuerung für den oder die linienhaften Bildsensoren erfolgen. Dadurch kann z.B. die Belichtungssteuerung des flächigen Bildsensors über einen Verschluß erfolgen und die Belichtung der linienhaften Bildsensoren gleichzeitig derart gesteuert werden, daß diese das Aufnahmeobjekt lückenlos erfassen.

Bei einer weiteren vorteilhaften Ausführungsform ist dem flächigen Bildsensor eine Einrichtung zur Bildwanderungskompensation zugeordnet, welche das vom flächigen Bildsensor erfaßte Bild bei einer geradlinigen Kamerabewegung während der Belichtung des flächigen Bildsensors konstant hält. Diese Ausführungsform ist insbesondere für den Einsatz der erfindungsgemäßen Kamera als Luftbildkamera für die Photogrammetrie und/oder Fernerkundung vorteilhaft.

Falls dem flächigen Bildsensor ein Kreiselsystem zugeordnet ist, welches eine Gierbewegung der Kamera erfaßt, wird die Zuordnung der von dem mindestens einem linienhaften Bildsensor aufgenommenen Zeilenbilder zu den von dem flächigen Bildsensor aufgenommenen Flächenbildern erleichtert. Dadurch kann der Rechenaufwand bei der Korrelation von Flächen- und Zeilenbildern erheblich reduziert werden, da das Gieren des Kameraträgers, z.B. eines quer zur Längsrichtung des linienhaften Bildsensors fliegenden Flugzeugs, zu einer Verdrehung der Zeilenbilder führt. Eine derartige Verdrehung ist bei der Korrelation der zu unterschiedlichen Zeitpunkten aufgenommenen Flächen- und Zeilenbilder durch reinen Bildvergleich erheblich schwieriger zu beherrschen als die durch Rollen und/oder Nicken des Kameraträgers hervorgerufenen Zeilenabweichungen (Rollen äußert sich in einer Verschiebung der Zeilenbilder entlang der Zeilenrichtung; Nicken führt zu einer vertauschten Abfolge der Zeilenbilder).

Durch die Kombination des Kreiselsystems mit dem flächigen Bildsensor kann zudem eine Kreiseldrift durch die Flächenbilder ermittelt werden, wodurch eine hohe Stabilität und Meßgenauigkeit des Kreiselsystems nur für den Zeitraum zwischen den Aufnahmeintervallen der Flächenbilder notwendig ist und deshalb der Aufwand für das Kreiselsystem erheblich reduziert werden kann.

Eine weitere vorteilhafte Ausführungsform der erfindungsgemäßen Kamera umfaßt eine Mehrzahl von linienhaften Bildsensoren, wobei jedem der linienhaften Bildsensoren ein Farbfilter vorgeschaltet ist und die Farbfilter vorzugsweise unterschiedlich sind. Bei dieser Ausführungsform sind die linienhaften Bildsensoren also multispektral und können zum Einfärben panchromatischer Flächenbilder verwendet werden. Somit kann durch die Erfindung eine multispektrale digitale Luftbildkamera geschaffen werden, ohne die Nachteile bekannter multispektraler CCD-Flächenkameras hinnehmen zu müssen. Denn bei multispektralen CCD-Flächenkameras müssen entweder zeitlich nacheinander verschiedene Farbauszüge belichtet werden oder der CCD-Chip mit einem Farbmosaik bedruckt werden, wobei im allgemeinen jeweils vier spektral unterschiedlich empfindliche Pixel unter Inkaufnahme einer Auflösungsreduzierung zusammengefaßt werden müssen.

Bei dem erfindungsgemäßen Bilderzeugungsverfahren werden die mit einer erfindungsgemäßen Kamera aufgenommenen Zeilenbilder mit den Flächenbildern derart kombiniert, daß ein Bild mit erhöhtem Informationsgehalt entsteht.

Falls mit spektral unterschiedlich empfindlichen linienhaften Bildsensoren aufgenommene multispektrale Zeilenbilder mit den Flächenbildern kombiniert werden, kann durch die erfindungsgemäße Kamera insbesondere eine multispektrale Stereokamera realisiert werden, wobei der oder die flächigen Bildsensoren lediglich ein panchromatisches Bild liefern müssen.

Bei einer vorteilhaften Ausführungsform werden vor der Korrelation mit den Flächenbildern die multispektralen Zeilenbilder zu einem Überlagerungszeilenbild überlagert, welches dann mit den Flächenbildern korreliert wird. Dabei sind natürlich bei der Kombination von Zeilen- und Flächenbildern zu einem einheitlichen Bild die unterschiedlichen Informationsgehalte der einzelnen Zeilenbilder wieder gesondert auswertbar.

Die Erfindung wird anhand der beiliegenden schematischen Darstellung einer erfindungsgemäßen Kamera erläutert.

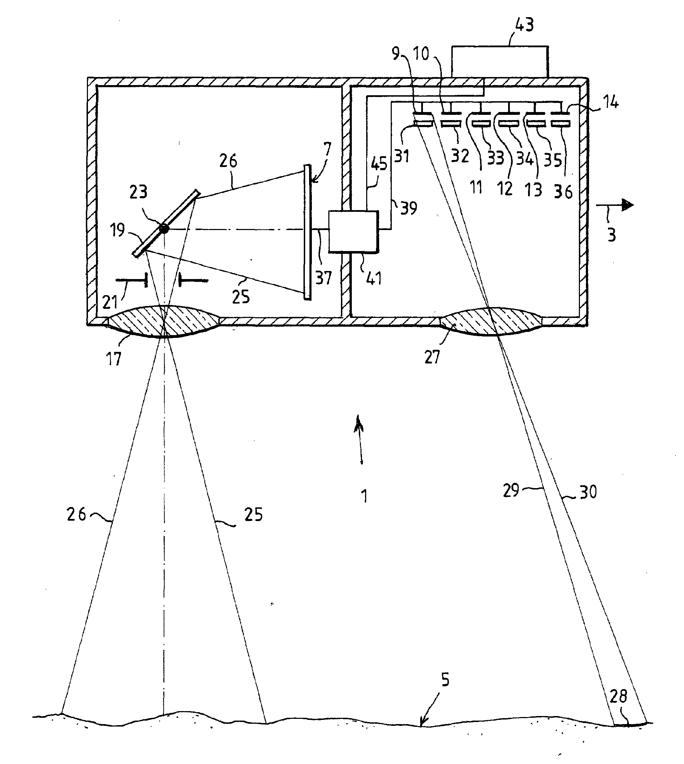

In der beiliegenden Figur ist eine als multispektrale Stereo-Luftbildkamera ausgebildete erfindungsgemäße Kamera 1 in einer schematischen Schnittdarstellung gezeigt. Die Kamera 1 ist an einem nicht dargestellten Fluggerät, z.B. Satellit, Flugzeug, Hubschrauber oder Drohne, angebracht und überfliegt in Richtung des Pfeils 3 ein das Aufnahmeobjekt bildendes Gelände 5.

Die Kamera 1 umfaßt einen z.B. als zweidimensionales CCD-Array ausgebildeten flächigen Bildsensor 7 und eine Mehrzahl von z.B. als CCD-Zeilendetektoren ausgebildeten linienhaften Bildsensoren 9, 10, 11, 12, 13 und 14. Die linienhaften Bildsensoren 9, 10, 11, 12, 13 und 14 sind mit ihrer Längsrichtung quer zur Flugrichtung 3 angeordnet.

Dem flächigen Bildsensor 7 ist ein Objektiv 17 zugeordnet, welches jeweils einen Abschnitt des überflogenen Geländes 5 mit Hilfe eines schwenkbaren Umlenkspiegels 19 auf den flächigen Bildsensor 7 abbildet. Ein einen derartigen Geländeabschnitt während der Belichtungszeit auf den Flächensensor 7 abbildendes Lichtbündel ist schematisch durch seine Randstrahlen 25 und 26 dargestellt.

Ein dem flächigen Bildsensor 7 zugeordneter Verschluß 21 steuert die Belichtung des flächigen Bildsensor 7 derart, daß die zeitlich aufeinanderfolgend aufgenommenen Flächenbilder einander jeweils überlappen. Der Überlappungsgrad wird dabei vorteilhafterweise ca. 50 % - ca. 66 % oder mehr betragen. Diese sich überlappenden Flächenbilder ermöglichen eine stereoskopische Auswertung des überflogenen Geländebereichs 5 mit photogrammetrischer Präzision.

Der Umlenkspiegel 19 ist um eine zur Flugrichtung 3 orthogonale Achse 23 derart verschwenkbar, daß trotz einer Bewegung der Kamera 1 der während der Belichtungszeit auf den Bildsensor 7 abgebildete Geländeabschnitt konstant bleibt. Der um seine Schwenkachse 23 verschwenkbare Umlenkspiegel 19 bildet also eine Einrichtung zur Bildwanderungskompensation, welche es erlaubt, die Belichtungszeit und damit die Empfindlichkeit des flächigen Bildsensors 7 zu erhöhen.

Den linienhaften Bildsensoren 9, 10, 11, 12, 13, 14 ist ein Objektiv 27 zugeordnet, welches jeweils einen sich quer zur Flugrichtung 3 erstreckenden Geländestreifen auf jeden der linienhaften Bildsensoren 9, 10, 11, 12, 13, 14 abbildet. Beispielhaft ist die Abbildung des sich in seiner Längserstreckung orthogonal zur Zeichenebene ausdehnenden Geländestreifens 28 auf den linienhaften Bildsensor 9 durch die Randstrahlen 29 und 30 des abbildenden Lichtbüschels dargestellt.

Dabei durchsetzt das Lichtbüschel 29, 30 vor seinem Auftreffen auf dem Zeilensensor 9 ein Farbfilter 31. Da auch den Zeilensensoren 10, 11, 12, 13 und 14 im Abbildungsstrahlengang jeweils ein Farbfilter 32, 33, 34, 35 und 36 vorgeschaltet ist und die Farbfilter 31, 32, 33, 34, 35, 36 eine jeweils unterschiedliche Spektralcharakteristik aufweisen, ermöglicht die Kamera 1 eine multispektrale Erfassung des überflogenen Geländebereichs 5.

Wenn die Aufnahmerate der Zeilensensoren 9, 10, 11, 12, 13, 14 dem Verhältnis zwischen Fluggeschwindigkeit und Flughöhe entspricht, ist zudem eine lückenlose Erfassung des überflogenen Geländebereichs 5 durch die Zeilensensoren 9, 10, 11, 12, 13, 14 möglich.

In einer über eine Datenleitung 37 mit dem Flächensensor 7 und über eine Datenleitung 39 mit den Zeilensensoren 9, 10, 11, 12, 13, 14 verbundenen Kombinationseinheit 41 wird aus den Flächen- und Zeilenbildern ein Gesamtbild erzeugt. Dazu werden die Flächenbilder mit den Zeilenbildern korreliert, d.h. die Zeilenbilder werden relativ zu den Flächenbildern derart gedreht und/oder verschoben, daß bei einer Überlagerung von Flächen- und Zeilenbildern die jeweiligen Objektdetails der Zeilenbilder über identischen Objektdetails der Flächenbilder liegen.

Ein Kreiselsystem 43 erfaßt Gierbewegungen der Kamera 1 bzw. des in der Figur nicht dargestellten Kameraträgers und ist über eine Datenleitung 45 mit der Kombinationseinheit 41 verbunden, um die Korrelation zwischen Flächen- und Zeilenbildern durch die über die Datenleitung 45 übermittelte Gierwinkelinformation zu erleichtern.

## Patentansprüche

1. Kamera (1) mit mindestens einem flächigen Bildsensor (7) und mit mindestens einem linienhaften Bildsensor (9, 10, 11, 12, 13, 14),
**dadurch gekennzeichnet, daß**
dem flächigen Bildsensor (7) und dem linienhaften Bildsensor (9, 10, 11, 12, 13, 14) jeweils ein gesondertes Objektiv (17, 27) zugeordnet ist.

2. Kamera (1) nach Anspruch 1, wobei dem flächigen Bildsensor (7) ein seine Belichtung steuernder Verschluß (21) zugeordnet ist.

3. Kamera (1) nach Anspruch 1 oder 2, wobei dem flächigen Bildsensor (7) eine Einrichtung (19) zur Bildwanderungskompensation zugeordnet ist, welche das vom flächigen Bildsensor (7) erfaßte Bild bei einer geradlinigen Kamerabewegung während der Belichtung des flächigen Bildsensors (7) konstant hält.

4. Kamera (1) nach einem der Ansprüche 1 bis 3, wobei die Kamera (1) ein Kreiselsystem (43) aufweist, welches eine Gierbewegung der Kamera (1) erfaßt, um die Zuordnung der von dem linienhaften Bildsensor (9, 10, 11, 12, 13, 14) aufgenommenen Zeilenbilder zu den von dem flächigen Bildsensor (7) aufgenommenen Flächenbildern zu erleichtern.

5. Kamera (1) nach einem der Ansprüche 1 bis 4 mit einer Mehrzahl linienhafter Bildsensoren (9, 10, 11, 12, 13, 14), wobei jedem der linienhaften Bildsensoren (9, 10, 11, 12, 13, 14) ein Farbfilter (31, 32, 33, 34, 35, 36) vorgeschaltet ist.

6. Kamera (1) nach Anspruch 5, wobei die Farbfilter (31, 32, 33, 34, 35, 36) unterschiedlich sind.

7. Kamera (1) nach einem der Ansprüche 1 bis 6, wobei eine Bildkombinationseinheit (41) mit dem flächigen Bildsensor (7) und mit dem linienhaften Bildsensor (9, 10, 11, 12, 13, 14) verbunden ist.

8. Bilderzeugungsverfahren mit einer Kamera (1) nach einem der Ansprüche 1 bis 7, wobei von dem linienhaften Bildsensor (9, 10, 11, 12, 13, 14) aufgenommene Zeilenbilder mit Flächenbildern, welche von dem flächigen Bildsensor (7) aufgenommen worden sind, korreliert werden und
die Zeilenbilder mit den Flächenbildern zu einem einheitlichen Bild kombiniert werden.

9. Verfahren nach Anspruch 8, wobei mit spektral unterschiedlich empfindlichen linienhaften Bildsensoren (9, 10, 11, 12, 13, 14) aufgenommene, multispektrale Zeilenbilder mit den Flächenbildern kombiniert werden.

10. Verfahren nach Anspruch 9, wobei vor der Korrelation mit den Flächenbildern die multispektralen Zeilenbilder zu einem Überlagerungszeilenbild überlagert werden und das Überlagungszeilenbild mit den Flächenbildern korreliert wird.

11. Verfahren nach einem der Ansprüche 8 bis 10 mit einer Kamera (1) nach Anspruch 4, wobei die Korrelation mit Hilfe der durch das Kreiselsystem (43) gelieferten Gierbewegungsinformation durchgeführt wird.

12. Verfahren nach einem der Ansprüche 8 bis 11, wobei die Kamera (1) an einem ein Aufnahmeobjekt (5) überfliegenden Kameraträger angeordnet ist und die Aufnahmerate des mindestens einen linienhaften Bildsensors (9, 10, 11, 12, 13, 14) dem Verhältnis aus Fluggeschwindigkeit und Flughöhe über dem Aufnahmeobjekt (5) entspricht.
